(19) Europäisches Patentamt
European Patent Office
Office européen des brevets

(11) **EP 3 261 356 A1**

(12) **EUROPEAN PATENT APPLICATION**

(43) Date of publication:
**27.12.2017 Bulletin 2017/52**

(51) Int Cl.:
*H04N 21/845* (2011.01)          *H04N 21/262* (2011.01)
*H04H 60/46* (2008.01)

(21) Application number: **17176917.7**

(22) Date of filing: **20.06.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority:  **21.06.2016   US 201662352592 P**

(71) Applicant: **Thomson Licensing
92130 Issy-les-Moulineaux (FR)**

(72) Inventors:
• **GOELA, Naveen
  Los Altos, CA 94022 (US)**
• **LYONS, Kent
  Los Altos, CA 94022 (US)**

• **HANSSON, Caroline
  Los Altos, CA 94022 (US)**
• **DATTA, Amit
  Los Altos, CA 94022 (US)**
• **PANIGRAHI, Snigdha
  Los Altos, CA 94022 (US)**
• **TANDON, Rashish
  Los Altos, CA 94022 (US)**
• **SHANG, Wenling
  Los Altos, CA 94022 (US)**
• **BOLOT, Jean
  Los Altos, CA 94022 (US)**

(74) Representative: **Huchet, Anne
  TECHNICOLOR
  1-5, rue Jeanne d'Arc
  92130 Issy-les-Moulineaux (FR)**

(54) **APPARATUS AND METHOD FOR RECORDING TRANSITION HISTORY AND SELECTING NEXT PLAYBACK FROM THE TRANSITION HISTORY**

(57) An apparatus comprises a processor configured to play back a first media content segment; determine if a first source media content segment exists in a transition history, which is one of the first media content segment and a segment similar to the first media content segment, the transition history including transitions from at least one source media content segment to at least one destination media content segment; and if the first source media content segment exists, play back a first destination media content segment transitioned from the first source media content segment in the transition history.

FIG. 2

## Description

### TECHNICAL FIELD

The present principles generally relate to an apparatus and method for recording transition history and selecting next playback from the transition history. In particular, the transition history may be recorded by a server or a playback device, and if the current playback media content segment is a source media content segment or the source media content segment is similar to the current playback media content segment in the transition history, a destination media content segment transitioned from the source media content segment in the transition history is selected for playback.

### BACKGROUND

With an increasing amount of video on demand (VOD) content available, a major problem for viewers is to find interesting video segments without searching full length videos exhaustively. A central challenge is to save users' time and effort in browsing, searching, navigating, and consuming full length video content, while avoiding several segments which are not of interest.

One traditional approach for VOD viewing of content is a video playlist. A playlist often contains full-length videos. The disadvantage of this approach is that coarse playlists do not take into account users' interests in highlighted sections of a video, and often users jump ahead during playback of a video to another portion of the same video or to another video in a playlist. Crowdsourcing is becoming a necessity for image and video tasks which are normally too compute-intensive for ordinary video processing techniques. Thus, there is a need to improve selection of a next video or video segment for playback.

### SUMMARY

According to an exemplary embodiment of the present principles, a method is presented. The method comprises playing back a first media content segment; determining if a first source media content segment exists in a transition history, which is one of the first media content segment and a segment similar to the first media content segment, the transition history including transitions from at least one source media content segment to at least one destination media content segment; and if the first source media content segment exists, playing back a first destination media content segment transitioned from the first source media content segment in the transition history.

According to an exemplary embodiment of the present principles, an apparatus is presented. The apparatus comprises a processor configured to play back a first media content segment; determine if a first source media content segment exists in a transition history, which is one of the first media content segment and a segment similar to the first media content segment, the transition history including transitions from at least one source media content segment to at least one destination media content segment; and if the first source media content segment exists, play back a first destination media content segment transitioned from the first source media content segment in the transition history.

According to an exemplary embodiment of the present principles, a computer program product stored in non-transitory computer-readable storage media is presented, comprising computer-executable instructions for playing back a first media content segment; determining if a first source media content segment exists in a transition history, which is one of the first media content segment and a similar segment to the first media content segment, the transition history including transitions from at least one source media content segment to at least one destination media content segment; and if the first source media content segment exists, playing back a first destination media content segment transitioned from the first source media content segment in the transition history.

### BRIEF DESCRIPTION OF THE DRAWINGS

The above-mentioned and other features and advantages of the present principles and the manner of attaining them, will become more apparent and the present principles will be better understood by reference to the following description of embodiments of the present principles taken in conjunction with the accompanying drawings, wherein:

FIG. 1 shows an exemplary system according to the present principles;
FIG. 2 shows an exemplary method according to the present principles;
FIG. 3 shows an exemplary transition histories for three users according to the present principles; and
FIG. 4 shows an exemplary combined history derived from the histories of the three users shown in FIG. 3 according to the present principles.

The examples set out herein illustrate exemplary embodiments of the present principles. Such examples are not to be construed as limiting the scope of the invention in any manner.

## DETAILED DESCRIPTION

The inventors recognize that viewers of video on demand (VOD) frequently transition between a sequence of video segments, rather than watch one video continuously from beginning to end. Examples of transitions can be found across diverse video genres: (1) music videos; (2) instrumental and tutorial videos; (3) how-to videos; (4) sports segments; (5) comedy clips, etc. The inventors recognize that transitions encode information about which video segments are of high-interest to viewers (i.e., in a way similar to links between web pages).

According to the principles of this disclosure, a crowdsourcing system and/or a smart playback device can be used to collect user transitions between media content segments, such as video segments. The crowdsourcing system or a smart playback device, for example, can provide an interface to collect user input by prompting users to switch between different media content segments in a media content series/playlist. The switching is guided by previous user selections, for example, from the user alone, from users using the same playback device, or from users of a social network, or is guided by similarity of media content segment. Based on all user transitions, a media content segment rank can be computed based on the transition history, which may be represented by a transition graph (web of transitions). This rank may supplement other metrics to evaluate the popularity of a particular media content segment. The disclosure also describes optimization algorithms (e.g., dynamic programming) for constructing a mixtape, a CD, a DVD, or a file including optimized number of media content segments having highest ranks/scores under the constraint that the total viewing time is bounded.

A crowdsourcing system can be provided by a media content provider, such as a streaming media website such as Netflix, Amazon, M-GO, or another streaming provider. The system may be a social networking provider, such as MySpace, Facebook, or LinkedIn. A social networking site provides a service or system that facilitates the creation, maintenance and management of social networks. For example, Facebook is a social networking site that allows users to create social networks such as interest groups therein. In one example, a social network may comprise a group of the user's friends. In another example, a social network may comprise a group of users sharing a similar interest, for example, in travel.

As used herein, "media content" may be defined to include any type of media, including any type of audio, video, and/or image media content received from any source. For example, "media content" may include Internet content, streaming services (e.g., M-GO, Netflix, Hulu, Amazon), recorded video content, video-on-demand content, broadcasted content, television content, television programs (or programming), advertisements, commercials, music, movies, video clips, interactive games, network-based entertainment applications, and other media assets. Media assets may include any and all kinds of digital media formats, such as audio files, image files or video files.

The term refers to a media content that is logically or physically segmented into segments. For example, each segment may last for a predetermined playback interval, such as but not limited to 90 seconds. The segmentation is important, so that when a user specifies a point in the media content for playback, the portion of the media content can be identified. The segmentation may also be based on different scenes, each constituting a segment. A media content segment may be a part of a media content or the media content itself, for example, if the media content is short. Examples of short media content are audio and video clips.

The present principles recognize that a user device may also record transition history and automatically selects the next media content segment for playback according to a recorded transition history or a transition history obtained from a crowdsourcing system.

Some examples of videos include tutorial video for learning an instrument, music video, comedy clip, and sports. In these exemplary videos, users normally jump from one video to the next in search of the most relevant or interesting content. Full-length videos are difficult to consume in one viewing session. After specific segments of a video are viewed, a user may not be interested in the remaining content of the video. According to principles of the disclosure, the sequence of the viewed segments form a mixtape, a CD, a DVD, or a file that the user can view to obtain the most pertinent and engaging content. According to the principles of the disclosure, the switching or transitioning from one media content segment to another media content segment is guided by a recorded transition history, as will be explained in more details later in this disclosure.

The present description illustrates the present principles. It will thus be appreciated that those skilled in the art will be able to devise various arrangements that, although not explicitly described or shown herein, embody the present principles and are included within its spirit and scope.

All examples and conditional language recited herein are intended for pedagogical purposes to aid the reader in understanding the present principles and the concepts contributed by the inventors to furthering the art, and are to be construed as being without limitation to such specifically recited examples and conditions.

Moreover, all statements herein reciting principles, aspects, and embodiments of the present principles, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the present principles. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor ("DSP") hardware, read-only memory ("ROM") for storing software, random access memory ("RAM"), and non-volatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The present principles as defined by such claims reside in the fact that the functionalities provided by the various recited means are combined and brought together in the manner which the claims call for. It is thus regarded that any means that can provide those functionalities are equivalent to those shown herein.

Reference in the specification to "one embodiment", "an embodiment", "an exemplary embodiment" of the present principles, or as well as other variations thereof, means that a particular feature, structure, characteristic, and so forth described in connection with the embodiment is included in at least one embodiment of the present principles. Thus, the appearances of the phrase "in one embodiment", "in an embodiment", "in an exemplary embodiment", or as well any other variations, appearing in various places throughout the specification are not necessarily all referring to the same embodiment.

It is to be appreciated that the use of any of the following "/", "and/or", and "at least one of", for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as readily apparent by one of ordinary skill in this and related arts, for as many items listed.

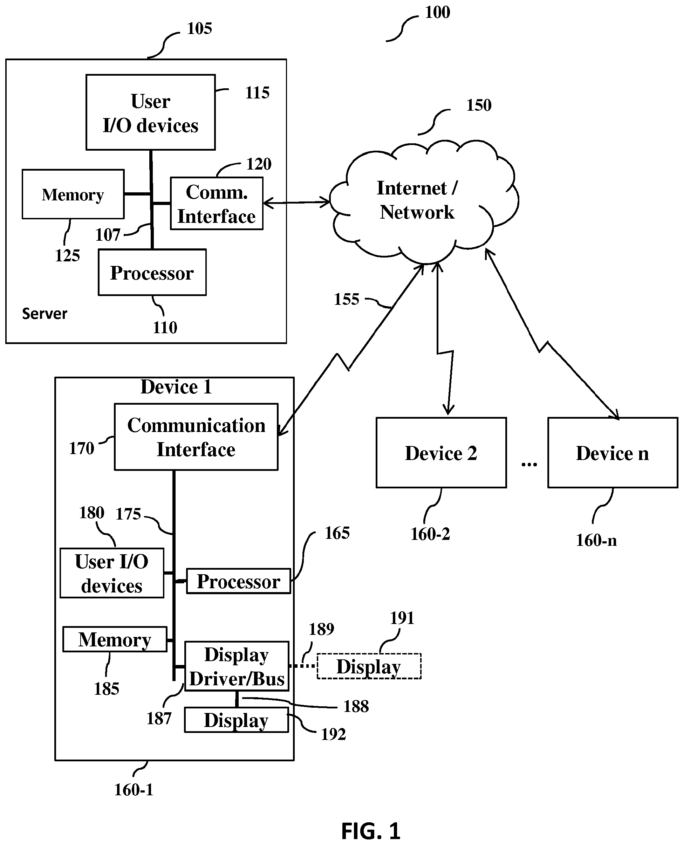

FIG. 1 shows an exemplary system according to the present principles. For example, a system 100 in FIG. 1 includes a crowdsourcing server 105 which provides media content segments and/or collects transitions from one media content segment to another media content segment from all users and/or an individual user, and stores the transition histories. Users access the media content segments from a provider, such as the crowdsourcing server 105, using smart user devices 160-1 to 160-n. Each smart user device can also collect and store a transition history for the device and/or each user of the device. A smart user device is operative or configured to play back a first media content segment; determine if a first source media content segment exists in a transition history, which is one of the first media content segment and a segment similar to the first media content segment; and if the first source media content segment exists, play back a first destination media content segment transitioned from the first source media content segment in the transition history. The transition history includes transitions from at least one source media content segment to at least one destination media content segment, and, as pointed out above, a smart user device can collect the transitions and create the transition history by itself or obtain a copy from the crowdsourcing server 105.

Various exemplary smart user devices 160-1 to 160-n in FIG. 1 may communicate with the exemplary server 105 over a communication network 150 such as the Internet, a wide area network (WAN), and/or a local area network (LAN). The crowdsourcing server 105 may communicate with smart user devices 160-1 to 160-n in order to provide and/or receive relevant information such as media content transition data, metadata, web pages, media contents, etc. The crowdsourcing server 105 may also provide additional processing of information and data when the processing is not available and/or capable of being conducted on the local smart user devices 160-1 to 160-n. As an example, the crowdsourcing server 105 may be a computer having a processor 110 such as, an Intel processor, running an appropriate operating system such as, Windows 2008 R2, Windows Server 2012 R2, Linux operating system, etc. In one embodiment, the server 105 is distributed over several devices, for example, on the cloud.

Smart user devices 160-1 to 160-n shown in FIG. 1 may be one or more of, e.g., a PC, a laptop, a tablet, a cellphone. A detailed block diagram of an exemplary user device according to the present principles is illustrated in block 160-1 of FIG. 1 as Device 1 and will be further described below.

An exemplary smart user device 160-1 in FIG. 1 comprises a processor 165 for processing various data and for controlling various functions and components of the device 160-1, including video decoding, processing to play and display a content, receiving media segment transition data from a server, and collecting and storing transitions made by each and/or all users of the device. The processor 165 communicates with and controls the various functions and components of the device 160-1 via a control bus 175 as shown in FIG. 1.

The exemplary device 160-1 in FIG. 1 may comprise user input/output (I/O) devices 180 which may comprise, e.g., a touch and/or a physical keyboard for inputting user data, and/or a speaker, and/or other indicator devices for outputting visual and/or audio user data and feedback. Device 160-1 may also comprise a display 192 which is driven by a display driver/bus component 187 under the control of processor 165 via a display bus 188 as shown in FIG. 1. In one exemplary embodiment, the display 192 is capable of displaying media segment recommendations. The type of the display 192 may be, e.g., LCD (Liquid Crystal Display), LED (Light Emitting Diode), OLED (Organic Light Emitting Diode), and etc. In addition, an exemplary user device 160-1 according to the present principles may have its display outside of the user device, or that an additional or a different external display may be used to display the content provided by the display driver/bus component 187. This is illustrated, e.g., by an external display 191 which is connected to an external display bus/interface 189 of device 160-1 of FIG. 1.

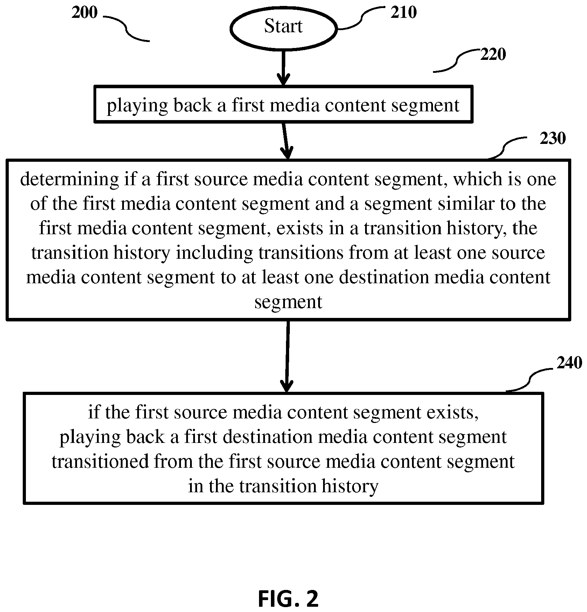

Exemplary device 160-1 also comprises a memory 185 which may represent both a transitory memory such as RAM, and a non-transitory memory such as a ROM, a hard drive or a flash memory, for processing and storing different files and information as necessary, including computer program products and software (e.g., for performing a method as represented by a flow chart diagram of FIG. 2 to be discussed below), webpages, user interface information, metadata including electronic program listing information, databases, one or more transition histories, etc., as needed. In addition, Device 160-1 also comprises a communication interface 170 for connecting and communicating to/from server 105 and/or other devices, via, e.g., network 150 using e.g., a connection through a cable network, a FIOS network, a Wi-Fi network, and/or a cellphone network (e.g., 3G, 4G, LTE), etc.

Smart user devices 160-1 to 160-n in FIG. 1 may access different media assets, web pages, transition histories, services or databases provided by server 105 using, e.g., HTTP protocol. A well-known web server software application which may be run by server 105 to provide web pages is Apache HTTP Server software available from http://www.apache.org. Likewise, examples of well-known media server software applications include Adobe Media Server and Apple HTTP Live Streaming (HLS) Server. Using media server software as mentioned above and/or other open or proprietary server software, server 105 may provide media content services similar to, e.g., Amazon.com, Netflix, or M-GO. Server 105 may use a streaming protocol such as e.g., Apple HTTP Live Streaming (HLS) protocol, Adobe Real-Time Messaging Protocol (RTMP), Microsoft Silverlight Smooth Streaming Transport Protocol, etc., to transmit various programs comprising various media assets such as, e.g., video programs, audio programs, movies, TV shows, software, games, electronic books, electronic magazines, electronic articles, and etc., to an end-user device 160-1 for purchase and/or viewing via streaming, downloading, receiving or the like.

The server 105 comprises the processor 110 which controls the various functions and components of the server 105 via a control bus 107 as shown in FIG. 1. In addition, a server administrator may interact with and configure server 105 to run different applications using different user input/output (I/O) devices 115 (e.g., a keyboard and/or a display) as well known in the art. Server 105 also comprises a memory 125 which may represent both a transitory memory such as RAM, and a non-transitory memory such as ROM, a hard drive or a flash memory, for processing and storing different files and information as necessary, including computer program products and software (e.g., as represented by a flow chart diagram of FIG. 2), webpages if the server is a social networking server, user interface information, user profiles, metadata including electronic program listing information, databases, search engine software, one or more transition histories, etc., as needed.

In addition, server 105 is connected to network 150 through a communication interface 120 for communicating with other servers or web sites (not shown) and to one or more smart user devices 160-1 to 160-n, as shown in FIG. 1. The communication interface 120 may also represent television signal modulator and RF transmitter in the case of when the crowdsourcing server 105 represents a television station, cable or satellite television provider. In addition, one skilled in the art would readily appreciate that other well-known server or user device components, such as, e.g., power supply, cooling fans, etc., may also be needed, but are not shown in FIG. 1 to simplify the drawing.

FIG. 2 represents a flow chart diagram of an exemplary method 200 for selecting a next video segment for playback according to a transition history in accordance with the present principles. Process 200 may be implemented as a computer program product comprising computer executable instructions which may be executed by e.g., processor 165 of device 160-1 and/or processor 110 of server 105 of FIG. 1. In the following example, the processor 165 is used to execute method 200. The computer program product having the computer-executable instructions may be stored in a non-transitory computer-readable storage media as represented by e.g., memory 185 and/or memory 125 of FIG. 1. One skilled in the art can readily recognize that the exemplary method shown in FIG. 2 may also be implemented using a combination of hardware and software (e.g., a firmware implementation), and/or executed using programmable logic arrays (PLA) or application-specific integrated circuit (ASIC), etc., as already mentioned above.

The method 200 is invoked at 210 of FIG. 2 and proceeds to step 220. At step 220 of FIG. 2, the processor 165 is operative or configured to play back a first media content segment.

The term, as previously stated, refers to a media content that is logically or physically segmented into segments. For example, each segment may last for a predetermined playback interval, such as but not limited to 90 seconds. The segmentation is important, so that when a user specifies a point in the media content for playback, the portion of the media content can be identified. The segmentation may also be based on different scenes, each constituting a segment. A media content segment may be a part of a media content or the media content itself, for example, if the media content is short. Examples of short media content are audio and video clips.

The identification of a logical segment in a media content may be the starting and ending time, the starting time and the duration, etc.

If segment information is not available for a media content segment, the processor 165 should automatically identify segments according to principles stated previously.

The meaning of the term "playing back" is conventional for the processor 165 of the user device 160-1. The term as applied to the server 105 is used herein to mean streaming or broadcasting.

At step 220, the processor 165 is operative or configured to determine if a first source media content segment, which is one of the first media content segment and a segment similar to the first media content segment, exists in a transition history, the transition history including transitions from at least one source media content segment to at least one destination media content segment.

In one embodiment, the processor 165 should determine if the first source media content segment that is the first media content segment exists in the transition history, and only if it does not, the processor 165 then determines if the first source media content segment is a media segment similar to the first media content segment exists in the transition history.

Conventional methods can be used to establish similarity. For example, if the major scene of the first media content segment and the major scene of a source media content segment in the transition history has a similar structure, they may be considered similar. In this method, if the major scene of the first media content segment includes a ball and the source media content segment includes a ball or a globe, they are structurally similar because they both have a similar geometric feature, in this case, they are primarily circular. In another example, if both segments include the same semantic content, e.g., presence of a dog, the two are considered similar. In some embodiments, the presence/absence of other specific aesthetic elements like repetitive patterns, textures, etc., can also be considered for aesthetic similarity.

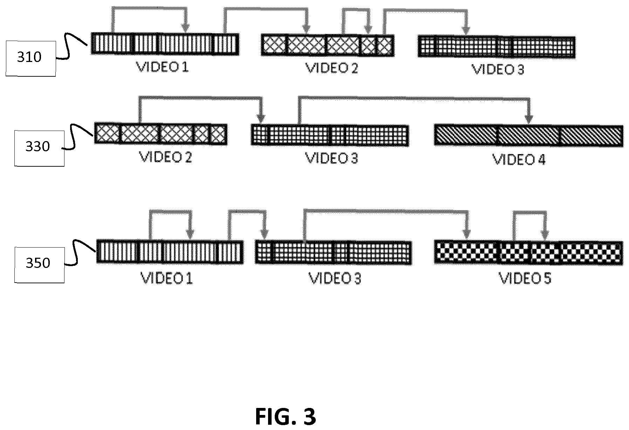

FIG. 3 illustrates transition histories 310, 330, and 350 for transitions respectively made by users A, B, and C. In this example, five videos, Videos 1-5, are used. Videos 1-5 respectively and illustratively have 4, 5, 4, 3, 4 segments. In the following illustration, the left most segment of each video is identified as segment 1, the segment number for the immediately following segment is 2, incremented by 1, the next is 3, incremented by 1, and so on and so forth. As such, segments can be identified by ordered numbers starting from 1 and from left to right of a media content.

Referring to transition history 310 made by user A, it is clear that user A makes a transition from segment 1 of Video 1 to segment 3 of Video 1 during the playback. User A does not interrupt the playback of segment 3 of Video 1 and the playback continues into segment 4 of Video 1, where user A transitions the playback to segment 2 of Video 2. Since user A does not make a transition at segment 3 of Video 1 to segment 2 of Video 2, it indicates that user A likes both segments 3 and 4 of Video 1. As such, in one embodiment, it can be interpreted that user A may make a transition from segment 1 of Video 1 to segment 3 of Video 1 or directly to segment 4 of Video 1.

User A also does not make a transition to segment 4 of Video 2 at segment 2 of Video 2. Rather, user A makes the transition until the playback of segment 3 of Video 2. As such, in one embodiment, it can be interpreted that user A may make a transition from segment 4 of Video 1 to segment 2 of Video 2 or directly to segment 3 of Video 2. Similarly, after making a transition from segment 3 of Video 2 to segment 4 of Video 2, user A does not make a transition to segment 2 of Video 3 until segment 5 of Video 2. As such, in one embodiment, it can be interpreted that user A may make a transition from segment 3 of Video 2 to segment 4 of Video 2 or directly to segment 5 of Video 2.

Referring to transition history 330 made by user B, it is clear that user B makes a transition from segment 2 of Video 2 to segment 1 of Video 3 during the playback. User B does not interrupt the playback of segment 1 of Video 3 and the playback continues into segment 2 of Video 3, where user B transitions the playback to segment 2 of Video 4. Since user B does not make a transition at segment 1 of Video 3, it can be interpreted that user B may make a transition from segment 2 of Video 2 to segment 1 of Video 3 or directly to segment 2 of Video 3.

Referring to transition history 350 made by user C, it is clear that user C makes a transition from segment 2 of Video 1 to segment 3 of Video 1 during the playback. User B does not interrupt the playback of segment 3 of Video 1 and the playback continues into segment 4 of Video 1, where user C transitions the playback to segment 1 of Video 3. Since user C does not make a transition at segment 3 of Video 1, it can be interpreted that user C may make a transition from segment 2 of Video 1 to segment 3 of Video 1 or directly to segment 4 of Video 1.

User C also does not make a transition to segment 1 of Video 5 at segment 1 of Video 3. Rather, user C makes the transition until the playback of segment 2 of Video 3. As such, in one embodiment, it can be interpreted that user C may make a transition from segment 4 of Video 1 to segment 1 of Video 3 or directly to segment 2 of Video 3. Similarly, after making a transition from segment 2 of Video 3 to segment 1 of Video 5, user C does not make a transition to segment 3 of Video 5 until segment 2 of Video 5. As such, in one embodiment, it can be interpreted that user C may make a transition from segment 2 of Video 3 to segment 1 of Video 5 or directly to segment 2 of Video 5.

The processor 165 may collect and record a transition history for each user if the processor 165 can identify each user, for example, by login name of the user. The processor 165 may combine/merge the three transition histories into one representing the combined transition history of all the users of the user device 160-1. The combined history can be obtained by collecting and recording all transitions without identifying the users of the user device 160-1.

In one embodiment, if a transition is from a first segment to a second segment and before the completion of the playback of the second segment, the user switches to a third segment, the processor 165 is operative or configured to add a transition from the first segment to the third segment in the transition history and optionally delete the transition from the first segment to the second segment in the transition history. The deletion is optional because the switching in the middle of playing the second segment may indicate that the user does not like the second segment or just likes a portion of the second segment.

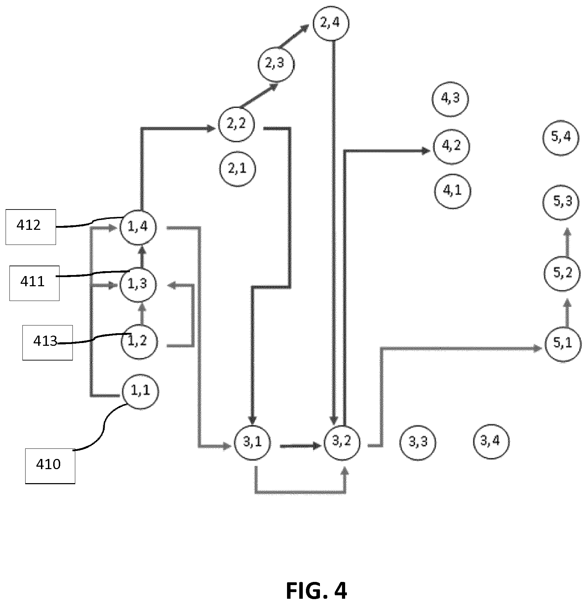

A transition history can be stored in any form. For example, the combined transition history of users A, B, C illustrated above is shown in FIG. 4 as a directed graph 400, in which each node represents a segment of a video and each directed edge represents a transition from a source video segment to a destination video segment. Each node is identified by (x, y), in which x identifying a video and y represents a segment of that video. For example, nodes 410, 411, and 412 respectively represent segment 1 of Video 1, segment 3 of Video 1, and segment 4 of Video 1 in FIG. 3. There is an edge directed from node 410 to 411 and another edge directed from node 410 to 412 indicating that there is a transition from segment 1 of Video 1 to segment 3 of Video 1 and another transition from segment 1 of Video 1 to segment 4 of Video 1, as explained above with respect to transition history 310 made by user A.

It is recognized that if a destination node has more source nodes transitioning into the destination node, the destination node is more popular or more favorable to a user. For example, node 412 has only one source node 410 transitioning into node 412, while node 411 has two source nodes, node 410 and 413, transitioning into node 411. As such, node 411 should be more popular or favorable than node 412. As used herein, a source node is connected to a destination node by an edge directed from the source node to the destination node.

In one embodiment, the popularity or rank of a node in the combined transition history can be determined by algorithm similar to Google's PageRank. In this application, the rank of a segment is the rank determined by the PageRank algorithm in relation to the combined graph shown in FIG. 4.

The processor 165 is operative or configured to store a copy of at least one transition history in memory 185. The processor 165 is also operative or configured to update a transition history when a new transition is detected.

The server 105 can also collect a transition history for each user and/or a combined history for all users including the users of the user device 160-1 and users of other user devices. The processor 165 may default to use one of the transition histories stored locally or one of the transition histories stored in the server 105. The processor 165 may identify a user playing back a media content segment and use the transition history stored locally for that user for automatic transition to the next media content segment or presenting a list of suggested next media content segments arranged in the order of popularity for the user to select one for playback. As stated above, the popularity or rank of a destination media content segment may be determined by the number of source media content segments transitioning into that destination media content segment, the more source media content segments the more popular. PageRank and other algorithms can be used to a rank a segment as well.

In one embodiment, the processor 165 may present all versions of transition history, for example, individual versions, combined version for all users of the user device 160-1, and combined version for users including users of the user device 160-1 and users of at least another user device, and allow the user to select one of them.

At step 240, if the first source media content segment exists, the processor 165 is operative or configured to play back a first destination media content segment transitioned from the first source media content segment in the transition history.

If the first source media content segment is not the first media content segment but similar to the first media content segment, the processor 165 may be operative or configured to update the transition history to record the new transition from the first video segment to the first destination video segment.

If the first source media content segment transitions to more than one destination media content segment, the processor 165 may automatically select the most popular destination media content segment for the next playback at end of the playback of current media content segment. The popularity of a media content segment can be measured, for example, by the number of source media content segments transitioning to that media segment in the transition history. For example, in FIG. 4, if the media content segment represented by node 410 is playing, the processor 165 should select segment 3 of Video 1 represented by node 411 for next playback rather than segment 4 of Video 1 represented by node 412 because node 411 has two source video segments and node 412 has only one. In one embodiment, the processor 165 may list the candidate next segments in the order of popularity for the user to select which one to be played back first. Continuing the example above, the processor 165 is operative or configured to present on the display 192 for user selection segment 3 of Video 1 represented by node 411 followed by segment 4 of Video 1 represented by node 412.

As shown in FIG. 3, the first media content segment and the first destination media content segment may belong to the same media content or each belongs to a different media content. Once the first destination media has been determined existed in the transition history, the processor 165 may automatically initiate the playback of the first destination media segment without user intervention. The popularity or rank of a media content segment can be determined by other methods, such as PageRank, as well. In one embodiment, the processor 165 is operative or configured to present to the user a list of the at least one destination media content segment, including the first destination media content segment, transitioned from the first source media content segment, wherein the first destination media content segment is selected by the user from the list and the processor 165 is operative or configured to play back the first destination media content segment after the user selection. In one embodiment, the user may select a different destination media content segment from the list for playback.

In one embodiment, if the first source media content segment does not exist in the transition history, the processor 165 is operative or configured to present at least one media content segment having a same type as the first media content segment. Two media content segments have the same type, for example, if they have the same actors/actresses or belong to the same category, theme, and/or scene. After the user has selected one of the suggested media content segments, the processor 165 is operative or configured to play back the selected suggested media content segment, and optionally, update the transition history to record the new transition from the first media content segment to the selected suggested media content segment.

If the server 105 is updating a transition history, the processor 165 is operative or configured to transmit the updating information to the server.

In one embodiment, the user may specify a duration and the processor 165 is operative or configured to compile a mixtapte that includes optimized number of media content segments that have the highest ranks. The ranks may be the ranks describe previously or derived by other methods. The ranks can be a combination of ranks from different ranking methods. The ranks can be determined from any version of the transition history.

Assuming that the user specified duration for the mixtape, a CD, a DVD, or a file is T, each segment of all the media contents is identified by an integer $i$, the rank and the duration of segment $i$ are represented by $S_i$ and $t_i$, and $Xi$ represents whether segment $i$ is selected (having a value of 1) or not selected (having a value of 0), the selection of segments for inclusion into the mixtape, the CD, the DVD, or the file can be determined by solving the following equation:

$$\text{Maximize} \sum S_i X_i (t_i/T)$$

$$\text{Subject to: } (\sum t_i X_i \leq T, where\ X_i\ is\ 0\ or\ 1$$

This is a Knapsack Dynamic Programming Optimization problem. After the selection of the segments, the processor 165 compiles the mixtape, the CD, the DVD, or the file with all the selected segments. The user can then select the mixtape, the CD, the DVD, or the file for playback.

While several embodiments have been described and illustrated herein, those of ordinary skill in the art will readily envision a variety of other means and/or structures for performing the functions and/or obtaining the results and/or one or more of the advantages described herein, and each of such variations and/or modifications is deemed to be within the scope of the present embodiments. More generally, those skilled in the art will readily appreciate that all parameters, dimensions, materials, and configurations described herein are meant to be exemplary and that the actual parameters, dimensions, materials, and/or configurations will depend upon the specific application or applications for which the teachings herein is/are used. Those skilled in the art will recognize, or be able to ascertain using no more than routine experimentation, many equivalents to the specific embodiments described herein. It is, therefore, to be understood that the foregoing embodiments are presented by way of example only and that, within the scope of the appended claims and equivalents thereof, the embodiments disclosed may be practiced otherwise than as specifically described and claimed. The present embodiments are directed to each individual feature, system, article, material and/or method described herein. In addition, any combination of two or more such features, systems, articles, materials and/or methods, if such features, systems, articles, materials and/or methods are not mutually inconsistent, is included within the scope of the present embodiment.

**Claims**

1. A method comprising:

   playing back (220) a first media content segment;
   determining (230) if a first source media content segment, which is one of the first media content segment and a segment similar to the first media content segment, exists in a transition history, the transition history including transitions from at least one source media content segment to at least one destination media content segment; and
   if the first source media content segment exists (240), playing back a first destination media content segment transitioned from the first source media content segment in the transition history.

2. The method of claim 1, wherein the first source media content segment also transitions to a second destination media content segment in the transition history and the first destination media content segment has a higher rank than the second destination media content segment in the transition history.

3. The method of claim 1 or 2, wherein a rank of a media content segment is determined from a number of source media content segments transitioning into this media content segment in the transition history, more source media content segments transitioning into indicating a higher rank.

4. The method of any one of claims 1, 2 and 3, further comprising if the first source media content segment is the similar segment to the first media content segment, updating the transition history to record a transition from the first media content segment to the first destination media content segment.

5. The method of any one of claims 1 to 4, further comprising:

   if the first source media content segment does not exist, presenting at least one media content segment having a same type as the first media content segment for a user selection;
   playing back one of the at least one media content segment selected by the user; and
   updating the transition history to record a transition from the first media content segment to the one of the at least one media content segment selected by the user.

6. The method of any one of the preceding claims, further comprising
   presenting to a user a list of the at least one destination media content segment, including the first destination media content segment, transitioned from the first source media content segment, wherein the first destination media content segment is selected by the user from the list.

7. The method of any one of the preceding claims, wherein the first media content segment and the first destination media content segment belong to a same media content.

8. An apparatus comprising:

   a memory (185); and
   a processor (165) coupled to the memory and configured to play back a first media content segment; determine if a first source media content segment, which is one of the first media content segment and a segment similar to the first media content segment, exists in a transition history stored in the memory, the transition history including transitions from at least one source media content segment to at least one destination media content segment; and if the first source media content segment exists, play back a first destination media content segment transitioned from the first source media content segment in the transition history.

9. The apparatus according to claim 8, wherein the first source media content segment transitions to a second destination media content segment in the transition history and the first destination media content segment has a higher rank than the second destination media content segment in the transition history.

10. The apparatus according to claim 8 or 9, wherein a rank of a media content segment is determined from a number of source media content segments transitioning into this media content segment in the transition history, more source media content segments transitioning into indicating a higher rank.

**11.** The apparatus according to any one of claims 8, 9 and 10, further comprising a memory for storing the transition history, wherein if the first source media content segment is the similar segment to the first media content segment, the processor is configured to update the transition history to record a transition from the first media content segment to the first destination media content segment.

**12.** The apparatus according to any one of claims 8 to 11, wherein if the first source media content segment does not exist, the processor is configured to present at least one media content segment having a same type as the first media content segment for a user selection; play back one of the at least one media content segment selected by the user; and update the transition history to record a transition from the first media content segment to the one of the at least one media content segment selected by the user.

**13.** The apparatus according to any one of claims 8 to 12, wherein the processor is configured to present to a user a list of the at least one destination media content segment, including the first destination media content segment, transitioned from the first source media content segment, wherein the first destination media content segment is selected by the user from the list.

**14.** The apparatus according to any one of claims 8 to 13, wherein the first media content segment and the first destination media content segment belong to a same media content.

**15.** A computer program product stored in non-transitory computer-readable storage media comprising computer-executable instructions for performing a method according to any one of claims 1 to 7.

FIG. 1

200 ⌇                          ( Start ) ⌇ 210

⌇ 220

playing back a first media content segment

⌇ 230

determining if a first source media content segment, which is one
of the first media content segment and a segment similar to the
first media content segment, exists in a transition history, the
transition history including transitions from at least one source
media content segment to at least one destination media content
segment

⌇ 240

if the first source media content segment exists,
playing back a first destination media content segment
transitioned from the first source media content segment
in the transition history

**FIG. 2**

310

VIDEO 1    VIDEO 2    VIDEO 3

330

VIDEO 2    VIDEO 3    VIDEO 4

350

VIDEO 1    VIDEO 3    VIDEO 5

# FIG. 3

**FIG. 4**

Europäisches
Patentamt

European
Patent Office

Office européen
des brevets

# EUROPEAN SEARCH REPORT

Application Number

EP 17 17 6917

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/149553 A1 (BANK JUDITH H [US] ET AL) 29 May 2014 (2014-05-29) | 1-3, 6-10, 13-15 | INV.<br>H04N21/845<br>H04N21/262 |
| Y | * paragraphs [0022], [0027], [0029], [0033] - [0034], [0053], [0057], [0071] - [0073], [0078]; figures 3-5, * ----- | 4,5,11, 12 | H04H60/46 |
| Y | US 2015/293928 A1 (CHEN DAVID MO [US] ET AL) 15 October 2015 (2015-10-15)<br>* claims 1, 2, 10, 11, 25; figures 3, 17 * ----- | 4,5,11, 12 | |

TECHNICAL FIELDS
SEARCHED       (IPC)

H04N
H04H

The present search report has been drawn up for all claims

| Place of search | Date of completion of the search | Examiner |
|---|---|---|
| Munich | 28 September 2017 | Katruff, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 17 17 6917

This annex lists the patent family members relating to the patent documents cited in the above-mentioned European search report.
The members are as contained in the European Patent Office EDP file on
The European Patent Office is in no way liable for these particulars which are merely given for the purpose of information.

28-09-2017

| Patent document cited in search report | Publication date | Patent family member(s) | Publication date |
|---|---|---|---|
| US 2014149553 A1 | 29-05-2014 | CN 103841429 A<br>US 2014149553 A1<br>US 2014149555 A1 | 04-06-2014<br>29-05-2014<br>29-05-2014 |
| US 2015293928 A1 | 15-10-2015 | US 2015293928 A1<br>US 2015293995 A1<br>US 2015296228 A1 | 15-10-2015<br>15-10-2015<br>15-10-2015 |

EPO FORM P0459

For more details about this annex : see Official Journal of the European Patent Office, No. 12/82